# EUROPEAN PATENT SPECIFICATION

(11) **EP 2 970 749 B1**
(45) Date of publication and mention of the grant of the patent: **27.02.2019**
(21) Application number: 14780244.1
(22) Date of filing: 03.03.2014
(51) Int. Cl.: C09K 8/56, E21B 43/04

(54) **METHOD OF USING MECHANICALLY DEGRADABLE POLYMERS FOR WELLBORE WORK FLUID APPLICATIONS**
METHODE DER VERWENDUNG VON MECHANISCH ABBAUBAREN POLYMEREN FÜR BOHRLOCHFLUIDANWENDUNGEN
PROCÉDÉ D'UTILISATION DE POLYMÈRES MÉCANIQUEMENT DÉGRADABLES DESTINÉS À DES APPLICATIONS DE FLUIDE ACTIF DE PUITS DE FORAGE

(30) Priority: 12.03.2013 US 201313795340
(43) Date of publication of application: 20.01.2016
(60) Divisional application: 18215885.7
(73) Proprietor: Halliburton Energy Services, Inc., Houston, TX 77072 (US)
(72) Inventor: DEVILLE, Jay Paul, Spring, Texas 77388 (US); ZHOU, Hui, Rochester, Minnesota 55902-3408 (US)
(74) Representative: Paulraj, Leonita Theresa
(86) International application number: PCT/US2014/019968
(87) International publication number: WO 2014/164022

(56) References cited:
- WO-A1-01/34939
- WO-A1-2006/104462
- US-A- 3 497 005
- US-A- 3 506 644
- US-A- 4 945 937
- US-A1- 2009 105 097
- US-A1- 2009 105 097
- US-A1- 2011 269 651
- US-B1- 6 454 003
- US-B1- 6 613 720

## Description

### TECHNICAL FIELD

This disclosure relates to wellbore work fluids including mechanically degradable polymers.

### BACKGROUND

Degradable polymers have been described for use in subterranean wellbore work fluids, including hydraulic fracturing, gravel packing, "frac-packing," fluid loss pills, diverting particles, viscous sweeps, work-over fluids, drilling fluids, rheological modifiers, and the like. The polymers are typically degraded via chemical reaction (e.g., via oxidative breakers or enzymes, change in pH) or application of thermal energy or electromagnetic radiation. Degradation of the polymers results in reduced viscosity of the downhole fluid, and can facilitate cleanup and recovery.

U.S. 2011/0269651 describes water-soluble degradable vinyl polymers with at least one labile group in the backbone of the polymer. The polymers are formed by contacting a vinyl monomer with a macroinitiator including a labile group and an oxidizing metal ion under redox polymerization conditions. The labile group (e.g., an ester group, an amide group, a carbonate group, an azo group, a disulfide group, an orthoester group, an acetal group, an etherester group, an ether group, a silyl group, a phosphazine group, a urethane group, an esteramide group, an etheramide group, an anhydride group, or a derivative or combination thereof) is cleaved via oxidation, reduction, photo-degradation, thermal degradation, hydrolysis, or microbial degradation. The polymers are tailored to degrade at a desired point in time and/or under desired downhole conditions thereby allowing, for example, self-destruction of filter cakes.

U.S. 7,306,040 describes a work fluid including a stimuli-degradable gel formed by a reaction including a gelling agent and a stimuli-degradable crosslinking agent that includes at least one degradable group and two unsaturated terminal group. The work fluid is placed into and allowed to degrade in a subterranean formation via time-triggered self-degradation as a function of pH.

U.S. 7,935,660 describes self-destructive filter cakes formed by incorporating into a drilling fluid a solid polymer capable of being converted by hydrolysis into one or more organic acids. Drilling fluids including one or more solid polymers capable of being converted by hydrolysis into one or more organic acids is also described. Similarly, U.S. 7,482,311 describes self-destructive fluid loss additives and filter cakes formed from a mixture of particulate solid acid precursors, such as a polylactic acid or a polyglycolic acid, and particulate solid acid-reactive materials, such as magnesium oxide or calcium carbonate. In the presence of water, the solid acid precursors hydrolyze and dissolve, generating acids that then dissolve the solid acid reactive materials.

U.S. 2010/0263867 describes a downhole wellbore filter cake breaker including one or more breaker chemicals (or activators thereof) capable of being activated with radiation to form one or more breaker reaction products which in turn are capable of reacting with the filter cake. A radiation source is deployed downhole and energized proximate the filter cake. A reservoir drilling fluid including an inactive, delayed, or sequestered breaker chemical and activator thereof is also described, wherein the breaker chemical (or activator) is activated directly or indirectly by radiation, such as microwave, visible, UV, soft X-ray, or other electromagnetic radiation. US 3506644 (D1) to a method for mechanical degradation of carboxyalkylcellulose and to a modified carboxyalkylcellulose for use as a drilling mud additives. In this method, the aqueous dispersion comprising modified carboxyalkylcellulose is subjected to high shearing stress so that the viscosity of the drilling fluid is decreased without a corresponding increase in the fluid loss property. In prior known methods and compositions comprising degradable polymers, such as in US 3506644, extreme care should be taken to ensure that thermal and/or chemical degradation of the polymer does not occur.

Degradation of the degradable polymers by methods known in the art typically imprecise and incomplete. For example, a change in pH or temperature, the initiation of a chemical reaction, or electromagnetic radiation typically causes polymer degradation over a length of time and may yield a combination of degraded and undegraded polymers. More precise control of a breaker mechanism that achieves good contact between the breaker and the degradable polymer is needed to achieve effective, reliable degradation downhole.

### SUMMARY

In one aspect, a composition includes a wellbore work fluid and a polymer having mechanically labile chemical bonds which comprise azo, triazole, cyclobutyl, or peroxo groups and are substantially inert to chemical and thermal degradation, wherein the mechanically labile chemical bonds are cleaved by mechanical energy.

Implementations may include one or more of the following features. The mechanically labile chemical bonds are substantially inert to chemical and thermal degradation. The mechanical energy can be, for example, ultrasonic energy. The polymer may be a linear polymer or a cross-linked polymer. The mechanically labile bonds may be in the backbone of the linear or crosslinked polymer. In some cases, the mechanically labile bonds are in the crosslinkages of the crosslinked polymer. The polymer may be a water-soluble polymer, a water-swellable polymer, an oil-soluble polymer, or an oil-swellable polymer. The mechanically labile chemical bonds include azo, triazole, cyclobutyl, and peroxo groups. The wellbore work fluid is selected from the group consisting of drilling fluid, completion fluid, cementing fluid, hydraulic fracturing fluid, and insulating packer fluid. The polymer may be used as a viscosifier, a friction reducer, or a fluid loss additive. In some cases, the polymer comprises 0.01 wt% to 10 wt% of the composition.

Another aspect includes injecting a composition including a wellbore work fluid and a polymer with mechanically labile chemical bonds which comprise azo, triazole, cyclobutyl, or peroxo groups and are substantially inert to chemical and thermal degradation, into a wellbore. The composition is combined with fluid present downhole to yield a composite fluid downhole. Mechanical energy is provided to the composite fluid, thereby cleaving the mechanically labile chemical bonds in the polymer.

Implementations may include one or more of the following features. For example, providing mechanical energy to the composite fluid may include introducing a mechanical energy source into the wellbore before providing the mechanical energy to the composite fluid. Providing the mechanical energy to the composite fluid may include activating the mechanical energy source. The mechanical energy source may be, for example, an ultrasonic device, and activating the mechanical energy source may include generating ultrasonic waves that interact with the polymer to cleave the mechanically labile chemical bonds. In some cases, a selected amount of time is allowed to lapse between injecting the composition into the wellbore and providing the mechanical energy to the composite fluid. Cleaving the mechanically labile chemical bonds in the polymer via the mechanical energy provided downhole may reduce a viscosity of the composite fluid. In certain cases, injecting the composition into the wellbore includes forming a filter cake having the polymer as a component in the filter cake, and cleaving the mechanically labile chemical bonds in the polymer facilitates breakup of the filter cake.

The mechanically labile bonds allow precise control of a breaker mechanism that achieves good contact between the breaker and the degradable polymer, thereby achieving effective, reliable degradation downhole independent of chemical equilibria based on, for example, pH, temperature, or the like.

These general and specific aspects may be implemented using a composition, system or method, or any combination of compositions, systems, or methods. The details of one or more embodiments are set forth in the accompanying drawings and the description below. Other features, objects, and advantages will be apparent from the description and the claims.

### DETAILED DESCRIPTION

Compositions including mechanically degradable polymers for drilling, cleaning, completion, cementing and treatment fluids are described herein. The mechanically degradable polymers include mechanically labile chemical bonds (mechanophores) that are substantially inert to chemical or thermal degradation under ambient downhole conditions. The mechanically labile chemical bond is cleaved by mechanical energy provided downhole. The mechanical energy provided downhole can be in the form of ultrasonic energy.

Mechanically degradable polymers described herein are added to well work fluids, including drilling fluids, cleaning fluids, completion fluids, cementing fluids, treatment fluids (e.g., hydraulic fracturing fluids), and other fluids such as insulating packer fluids. The polymers can be water-soluble, water-swellable, or oil-soluble. In some cases, the mechanically degradable polymers are used as viscosifiers, friction reducers, or fluid loss additives. The mechanically degradable polymer can be a linear polymer or a crosslinked polymer (e.g., a hydrogel). The mechanically labile chemical bonds (i.e., the mechanophore) can be in the polymer backbone only, the crosslinkages only, or in both the polymer backbone and the crosslinkages. As described herein, examples of mechanically labile chemical bonds include azo groups, triazole groups, peroxide groups, and cyclobutyl groups. Other examples are known in the art.

U.S. 2011/0269651 describes the preparation of water-soluble polymers containing labile links in the polymer backbone according to the scheme shown below:

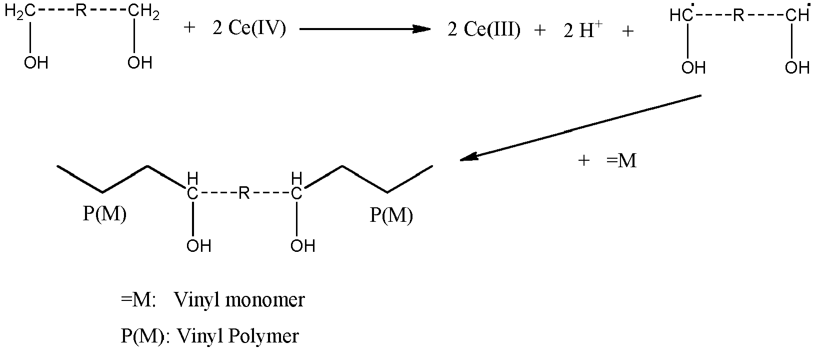

In this scheme, a difunctional initiator containing two hydroxyl groups is reacted with Ce(IV) to generate a bi-radical, which initiates polymerization with the monomers. One example of the difunctional initiator is 2,2'-(1H-1,2,3-triazole-1,4-diyl)diethanol **(1),** which has been synthesized by Brantley et al. (Science, 2011, 333 (6049), 1606-1609).

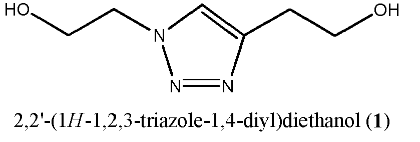

The vinyl monomer refers to a monomer that contains double bonds that can undergo free radical polymerization. Examples of vinyl monomers include acrylamide, acrylic acid and salts, 2-acrylamide-2-methylpropane sulfonic acid and salts. The water-soluble polymer prepared can be hydrophobically modified by the reaction of the polymer with a hydrophobic compound or simply by copolymerization of water-soluble vinyl monomer with a water-insoluble vinyl monomer. The polymer can also be chemically crosslinked to form a hydrogel by reaction of the polymer with a crosslinking agent or by copolymerization of vinyl monomers with a vinyl crosslinker. The vinyl crosslinker may or may not contain triazole groups. Examples of vinyl crosslinker with triazole groups are shown below:

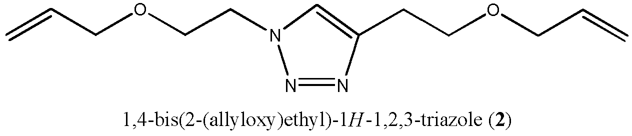

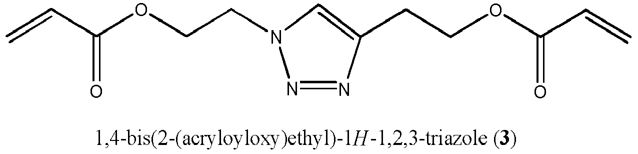

Four groups of polymers that contain triazole groups can be prepared: (i) linear polymers with triazole groups in the polymer backbone; (ii) crosslinked hydrogels with triazole groups in the polymer backbone only; (iii) crosslinked hydrogels with triazole groups in the crosslinkages only; and (iv) crosslinked hydrogels with triazole groups in both the polymer backbone and the crosslinkages. Polymers in groups (i), (ii), and (iv), which contain triazole groups in the polymer backbone, can be prepared using the reaction mentioned above. Polymers in group (iii), which do not have triazole groups in the backbone, can be prepared by conventional free radical polymerization using the monomers mentioned in U.S. 2011/0269651 in the presence of triazole-containing crosslinkers such as **2** and **3.** Examples of free radical initiators are shown in U.S. 2011/0168393.

Brantley et al. describes the application of ultrasound to a triazole embedded within a poly(methyl acrylate) chain that results in a formally retro [3 + 2] cycloaddition. The liberated azide and alkyne moieties can be subsequently clicked back together to yield the triazole-based starting material.

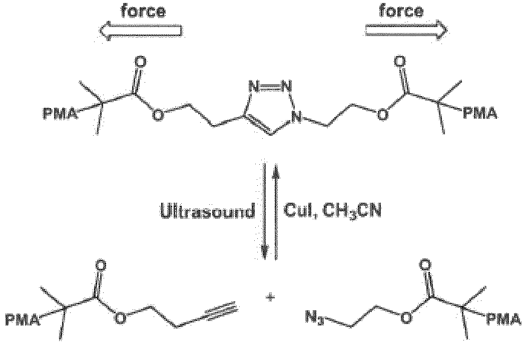

Berkowski et al. (Macromolecules 2005, 38, 8975-8978) demonstrates ultrasound-induced site-specific cleavage of azo-functionalized poly(ethylene glycol) polymer in solution. Kryger et al. (J. Am. Chem. Soc. 2010, 132, 4558-4559) describes ultrasound-induced cleavage of a strained cyclobutane ring to yield a cyanoacrylate-terminated polymer.

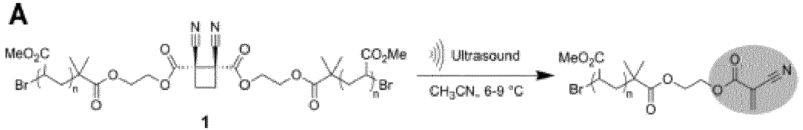

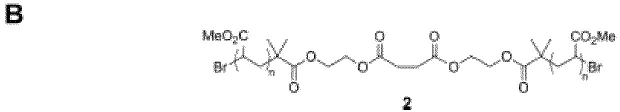

Encina et al. (J. of Polymer Sci., Polymer Letters Edition, 18, 757-760 (1980)) describes ultrasonic degradation of polyvinylpyrrolidone with a few peroxide linkages incorporated into the main backbone.

The above mentioned polymers or hydrogels, and other water-soluble and water-swellable polymers and hydrogels with mechanically labile bonds including azo groups, triazole groups, cyclobutyl groups, peroxo groups, and the like, can be used in well work fluids, including drilling, cleaning, completion, cementing and treatment (e.g., hydraulic fracturing), as viscosifiers, friction reducers, or fluid loss additives. By introducing labile bonds into the polymer molecules, polymer breaking is accomplished within the molecules and therefore achieved more effectively than a chemical or thermal process that relies on reaction kinetics. After their use downhole, the polymers are broken down into small pieces and removed (e.g., before bringing the well into production).

A mechanically degradable polymer may be added to a drilling fluid such as a water-based mud, an oil-based mud, or a synthetic-based mud in a range from about 0.01 wt% to about 10 wt%. The polymer acts as a fluid loss additive to reduce or prevent loss of the drilling fluid through the wall of the wellbore into the formation. During a drilling operation, the drilling fluid is pumped through the drill string onto the drill bit. Cuttings are carried in the drilling fluid up the annulus between the drill string and the sides of wellbore. A filter cake that contains the mechanically degradable polymer forms on the wall of the wellbore to prevent further fluid loss into the formation. During a wellbore cleanup operation, an acoustic string (i.e., a well string with an acoustic source configured to produce a specified acoustic signal) may be placed in the wellbore on tubing or wire and activated at a selected time to generate mechanical energy and break the mechanically labile bonds in the polymer, thereby disintegrating the filter cake and facilitating filter cake removal from the wellbore.

The mechanically degradable polymer may also be added to a completion fluid or a workover fluid in a range from about 0.01 wt% to about 10 wt%. The polymer acts as a viscosifier or a fluid loss additive. Thus, for example, the completion fluid with mechanically degradable polymer can be pumped into the wellbore to displace the drilling fluid from the wellbore and to maintain pressure control over the well as the completion equipment is being installed. The workover fluid with mechanically degradable polymer can be pumped into completed well to maintain pressure control over the well as the workover operation is being performed. Similar to the drilling fluids, a filter cake is formed by the fluids that can be degraded by the mechanical energy (e.g., with an acoustic string) to facilitate filter cake removal and wellbore cleanup.

The mechanically degradable polymer may be added to a hydraulic fracturing fluid as a viscosifier to suspend and transport proppants. The amount of the polymer is in the range from about 0.01 wt% to about 5 wt%. After hydration in the fracturing fluid, the polymer can be further crosslinked with transition metal ions such as Cr³⁺, Zr⁴⁺, Ti⁴⁺, and Al³⁺. The fracturing operation is performed by pumping the hydraulic fracturing fluid with suspended proppants into the wellbore at a high rate and pressure to induce and widen fractures in the formation around the wellbore. The hydraulic fracturing fluid places the proppants into the fractures, and the proppants in turn, prop the fractures open when the hydraulic fracturing fluid is drained off. After the proppants have been placed in the fracture, the polymer can be degraded by the mechanical energy, thereby reducing the viscosity of the fracturing fluid to let the proppants settle in the fractures. A filter cake may form during hydraulic fracturing because of the polymer, which impairs oil or gas flowback. By breaking the polymer filter cake with the mechanical energy (e.g., with an acoustic string), the filter cake can be more easily released from the wellbore wall and the formation damage can be reduced significantly, thereby enhancing oil or gas recovery.

The mechanically degradable polymer may be used as a friction reducer during slickwater fracturing in the range of about 0.001-0.1 wt%. Thus, the fracturing operation is performed by pumping the hydraulic fracturing fluid without suspended proppants into the wellbore at a high rate and pressure to induce and widen fractures in the formation around the wellbore. Similar to the example above, the polymer forms a filter cake that impairs oil or gas flowback. Such formation damage can be reduced significantly by using the mechanical energy to break the polymer making it more easily released from the wellbore wall.

Compared to chemical breaking, the mechanical breaking of the polymer can be controlled precisely and timely (e.g., at a specified time during or after a well operation), thereby facilitating wellbore cleanup and formation damage control.

Further modifications and alternative embodiments of various aspects are within the concepts herein. Accordingly, this description is to be construed as illustrative only. It is to be understood that the forms depicted and described herein are to be taken as examples of embodiments. Elements and materials may be substituted for those illustrated and described herein, parts and processes may be reversed, and certain features may be utilized independently. Changes may be made in the elements described herein without departing from the following claims.

## Claims

1. A method comprising:
injecting a composition comprising a wellbore work fluid and a polymer into a wellbore, wherein the polymer comprises mechanically labile chemical bonds which comprise azo, triazole, cyclobutyl, or peroxo groups and are substantially inert to chemical and thermal degradation;
combining the composition with fluid present downhole to yield a composite fluid downhole;
providing mechanical energy to the composite fluid; and
cleaving the mechanically labile chemical bonds in the polymer via the mechanical energy provided to the composite fluid.

2. The method of claim 1, wherein providing mechanical energy to the composite fluid comprises introducing a mechanical energy source into the wellbore before providing the mechanical energy to the composite fluid.

3. The method of claim 2, wherein providing the mechanical energy to the composite fluid comprises activating the mechanical energy source, optionally the mechanical energy source is an ultrasonic device, and activating the mechanical energy source comprises generating ultrasonic waves that interact with the polymer to cleave the mechanically labile chemical bonds.

4. The method of claim 1, further comprising allowing a selected amount of time to lapse between injecting the wellbore work fluid into the wellbore and providing the mechanical energy to the composite fluid.

5. The method of claim 1, wherein cleaving the mechanically labile chemical bonds in the polymer via the mechanical energy provided downhole reduces a viscosity of the composite fluid.

6. The method of claim 1, wherein injecting the composition into the wellbore comprises forming a filter cake comprising the polymer, and cleaving the mechanically labile chemical bonds in the polymer facilitates breakup of the filter cake.

## Patentansprüche

1. Verfahren, umfassend:
Einspritzen einer Zusammensetzung, die ein Bohrlochfluid und ein Polymer umfasst, in ein Bohrloch, wobei das Polymer mechanisch labile chemische Bindungen umfasst, die Azo-, Triazol-, Cyclobutyl- oder Peroxo-Gruppen umfassen und im Wesentlichen gegenüber chemischem und thermischem Abbau inert sind;
Verbinden der Zusammensetzung mit Fluid, das im Bohrloch vorhanden ist, um im Bohrloch ein Verbundfluid zu erhalten; und
Bereitstellen von mechanischer Energie für das Verbundfluid; und
Spalten der mechanisch labilen chemischen Bindungen in dem Polymer mittels der mechanischen Energie, die dem Verbundfluid bereitgestellt wird.

2. Verfahren nach Anspruch 1, wobei das Bereitstellen mechanischer Energie für das Verbundfluid das Einführen einer Quelle mechanischer Energie in das Bohrloch, bevor die mechanische Energie dem Verbundfluid bereitgestellt wird, umfasst.

3. Verfahren nach Anspruch 2, wobei das Bereitstellen mechanischer Energie für das Verbundfluid das Aktivieren der Quelle mechanischer Energie umfasst, wobei die Quelle mechanischer Energie optional eine Ultraschallvorrichtung ist, und wobei das Aktivieren der Quelle mechanischer Energie das Erzeugen von Ultraschallwellen umfasst, die mit dem Polymer in Wechselwirkung treten, um die mechanisch labilen chemischen Bindungen zu spalten.

4. Verfahren nach Anspruch 1, ferner umfassend das Verstreichenlassen einer ausgewählten Zeitdauer zwischen dem Einspritzen des Bohrlochfluids in das Bohrloch und dem Bereitstellen der mechanischen Energie für das Verbundfluid.

5. Verfahren nach Anspruch 1, wobei das Spalten der mechanisch labilen chemischen Bindungen in dem Polymer mittels der mechanischen Energie, die im Bohrloch bereitgestellt wird, eine Viskosität des Verbundfluids verringert.

6. Verfahren nach Anspruch 1, wobei das Einspritzen der Zusammensetzung in das Bohrloch das Herstellen eines Filterkuchens, der das Polymer umfasst, umfasst, und das Spalten der mechanisch labilen chemischen Bindungen im Polymer das Zerbrechen des Filterkuchens begünstigt.

## Revendications

1. Procédé comprenant :
l'injection d'une composition comprenant un fluide actif de puits de forage et un polymère dans un puits de forage, dans lequel le polymère comprend des liaisons chimiques mécaniquement instables qui comprennent des groupes azo, triazole, cyclobutyle ou peroxo et sont sensiblement inertes à la dégradation chimique et thermique ;
la combinaison de la composition avec un fluide présent en fond de trou pour produire un fluide composite en fond de trou ;
la fourniture d'énergie mécanique au fluide composite ; et
le clivage des liaisons chimiques mécaniquement instables dans le polymère par l'intermédiaire de l'énergie mécanique fournie au fluide composite.

2. Procédé selon la revendication 1, dans lequel la fourniture d'énergie mécanique au fluide composite comprend l'introduction d'une source d'énergie mécanique dans le puits de forage avant la fourniture de l'énergie mécanique au fluide composite.

3. Procédé selon la revendication 2, dans lequel la fourniture de l'énergie mécanique au fluide composite comprend l'activation de la source d'énergie mécanique, la source d'énergie mécanique étant éventuellement un dispositif à ultrasons, et l'activation de la source d'énergie mécanique comprend la génération d'ondes ultrasonores qui interagissent avec le polymère pour cliver les liaisons chimiques mécaniquement instables.

4. Procédé selon la revendication 1, comprenant en outre le fait de permettre l'écoulement d'une certaine quantité de temps sélectionnée entre l'injection du fluide actif de puits de forage dans le puits de forage et la fourniture de l'énergie mécanique au fluide composite.

5. Procédé selon la revendication 1, dans lequel le clivage des liaisons chimiques mécaniquement instables dans le polymère par l'intermédiaire de l'énergie mécanique fournie en fond de trou réduit une viscosité du fluide composite.

6. Procédé selon la revendication 1, dans lequel l'injection de la composition dans le puits de forage comprend la formation d'un gâteau de filtration comprenant le polymère, et le clivage des liaisons chimiques mécaniquement instables dans le polymère facilite la rupture du gâteau de filtration.
